# EUROPEAN PATENT SPECIFICATION

(11) **EP 4 290 662 B1**
(45) Date of publication and mention of the grant of the patent: **22.10.2025**
(21) Application number: 22787281.9
(22) Date of filing: 03.03.2022
(51) Int. Cl.: H01M 50/258, H01M 50/24, H01M 50/293, H01M 50/291, H01M 50/213, H01M 10/613, H01M 10/6235, H01M 50/211, H01M 10/643, H01M 10/653, H01M 10/6557, H01M 10/6563

(54) **BATTERY PACK AND POWER TOOL**
BATTERIEPACK UND ELEKTROWERKZEUG
BLOC-BATTERIE ET OUTIL ÉLECTRIQUE

(30) Priority: 15.04.2021 CN 202110403306; 15.04.2021 CN 202110403389; 15.04.2021 CN 202110403460; 12.05.2021 CN 202110517154; 12.05.2021 CN 202110519193
(43) Date of publication of application: 13.12.2023
(73) Proprietor: Nanjing Chervon Industry Co., Ltd., Nanjing, Jiangsu 211106 (CN)
(72) Inventor: HU, Guiwu, Nanjing, Jiangsu 211106 (CN); YANG, Dong, Nanjing, Jiangsu 211106 (CN); GONG, Binbin, Nanjing, Jiangsu 211106 (CN); YANG, Dezhong, Nanjing, Jiangsu 211106 (CN); DUAN, Junya, Nanjing, Jiangsu 211106 (CN)
(74) Representative: Sun, Yiming
(86) International application number: PCT/CN2022/078981
(87) International publication number: WO 2022/218051

(56) References cited:
- EP-A1- 3 767 732
- EP-B1- 3 014 690
- CN-A- 105 895 840
- CN-A- 112 117 480
- CN-U- 212 323 124
- CN-U- 212 323 145
- CN-U- 212 323 146
- CN-U- 212 366 126
- CN-U- 212 517 400
- JP-A- 2014 072 006
- US-A1- 2013 136 965

## Description

### TECHNICAL FIELD

The present application relates to a battery pack, for example, a battery pack applicable to a power tool.

### BACKGROUND

In recent years, with the popularity of power tools, battery packs applicable to the power tools have gradually been widely used. Due to the dustproof and waterproof requirements of the battery pack, in the related art, generally, cell units in the battery pack are stacked layer by layer and then sealed with the sealant. When the battery pack is stored at high temperatures or in the process of charging and discharging, the air pressure in the sealed space increases as the temperature rises and squeezes the cell units, and the air pressure squeezes the cells, causes the cells to move toward two sides of a stacking surface, and finally squeezes and deforms the plastic housing, affecting the appearance of the product.

EP 3 014 690 A1 describes a lithium-polymer-based battery pack for powering a handheld power tool or a garden tool. The battery pack has a plurality of battery cells located within a housing that is selectively connectable to and supportable by a handheld power tool or a garden tool. The battery cells have a lithium-polymer-based chemistry and a nominal charged internal impedance of less than or equal to approximately 5 milliohms.

JP 2014 072006 A describes a battery pack having a housing case for containing a battery cell and being removably attachable to a tool body. The battery pack includes a circuit board provided in the housing case, having a battery-side terminal connected to the battery cell; a terminal insertion hole provided to interconnect the inside and outside of the housing case, through which the battery-side terminal is inserted; and a seal member arranged in the housing case between the circuit board and the cover of the housing case.

CN 212323146 U describes a battery pack and an electric vehicle. The battery pack comprises a shell, a battery cell assembly, a first spacer, a pressure relief part, and glue. The first spacer is arranged between the first side of the battery cell assembly and the shell, and deforms when the temperature exceeds a first threshold value. The glue is applied between at least part of the area outside the first side of the battery cell assembly and the shell to fix the battery cell assembly to the shell.

### SUMMARY

The present application provides a battery pack applicable to a power tool so that the structure of the battery pack is simpler, the cost is reduced, the weight of the whole pack is reduced, and the balance of the air pressure inside and outside the battery pack can be achieved.

The present application defines the technical solutions as specified by the appended claims.

### BRIEF DESCRIPTION OF DRAWINGS

FIG. 1 is a structural view of a power tool as an example;
FIG. 2 is a structural view of a battery pack;
FIG. 3 is an exploded view of the battery pack in FIG. 2;

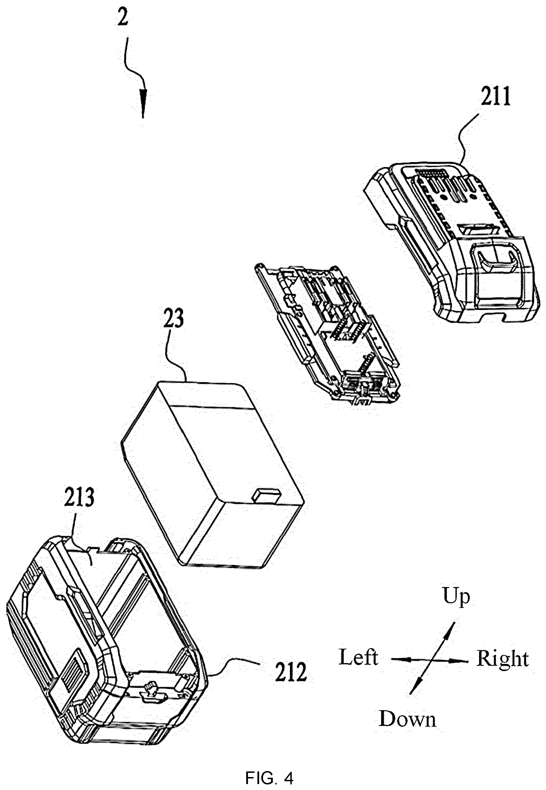

FIG 4 is an exploded view of a battery pack according to another example;
FIG. 5 is a structural view of a cell assembly and a deformation assembly of the battery pack in FIG. 4;
FIG. 6 is a structural diagram of a cell assembly and an air-permeable device;
FIG. 7 is a partial enlarged view of part A in FIG. 6;
FIG. 8 is an exploded view of an example of an air-permeable device;
FIG. 9 is a view illustrating an air circulation path in a battery pack;
FIG. 10 is a structural view of another example of a deformation assembly;

### DETAILED DESCRIPTION

The present application is described below in detail in conjunction with drawings and examples.

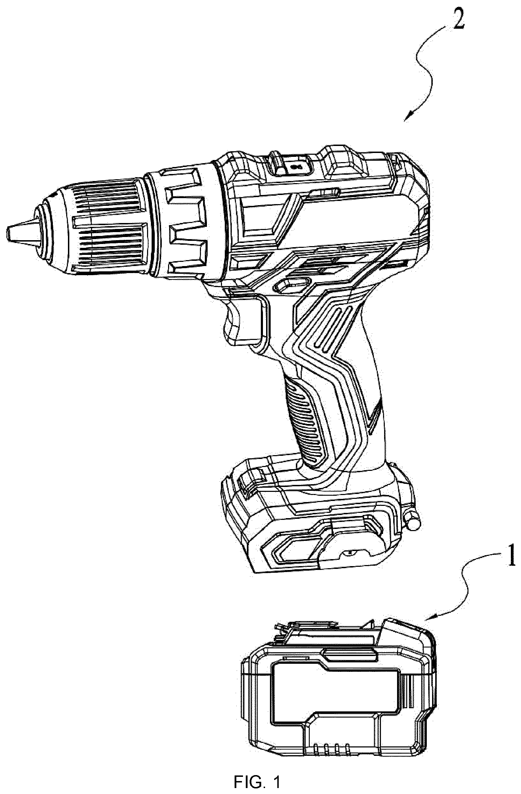

FIG. 1 shows a power tool 2 and a battery pack 1 that is applicable to the power tool 2 and supplies power to the power tool 2. In this example, the power tool 2 is an electric drill, and it is to be understood that the battery pack 1 may also be applied to a handheld power tool such as an electric wrench, an electric screwdriver, an electric hammer drill, an electric circular saw, and a sander, a table power tool such as a table saw, and an outdoor tool such as a mower, a grass trimmer, a pair of electric shears, a pruner, and an electric saw. Apparently, the following examples are part, not all, of examples of the present application.

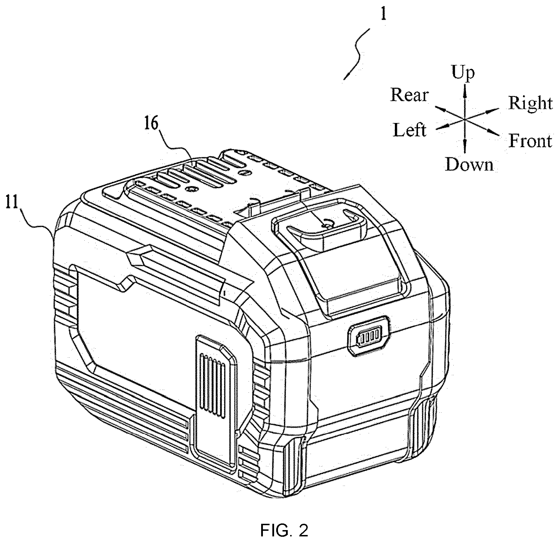

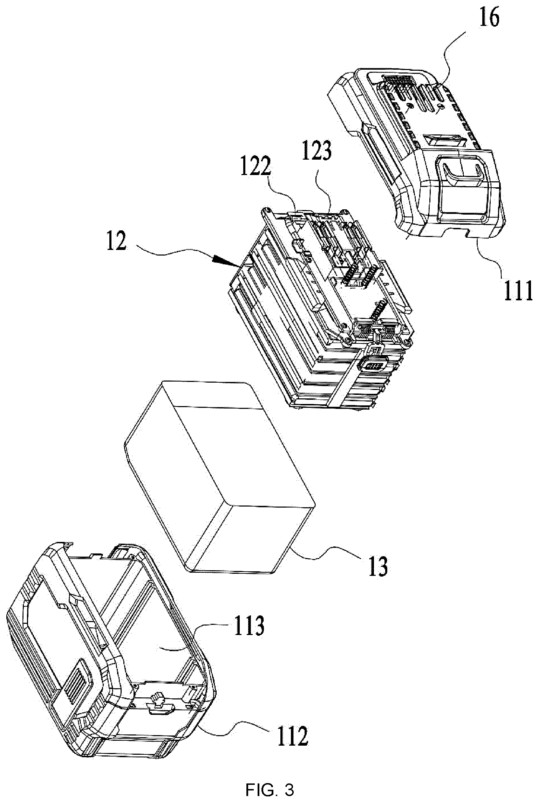

Fig. 3 shows the basic structure of the battery pack, with the details possibly not fully matching the claimed embodiment. Referring to FIGS. 2 and 3, the battery pack 1 includes at least a housing 11, a cell assembly 12, and a sealing member 13. The housing 11 includes an upper housing 111 and a lower housing 112 that are assembled at an interface to form an inner cavity 113. The cell assembly 12 is disposed in the inner cavity 113 formed by the housing 11. The cell assembly 12 further includes a positive terminal 122 of the cell assembly and a negative terminal 123 of the cell assembly that are used for outputting the electrical energy of the cell assembly 12 or inputting the electrical energy to charge the cell assembly 12.

The battery pack 1 further includes a battery pack interface 16 electrically connected to at least the cell assembly 12. Specifically, the battery pack interface 16 is formed on the upper surface of the upper housing 111.

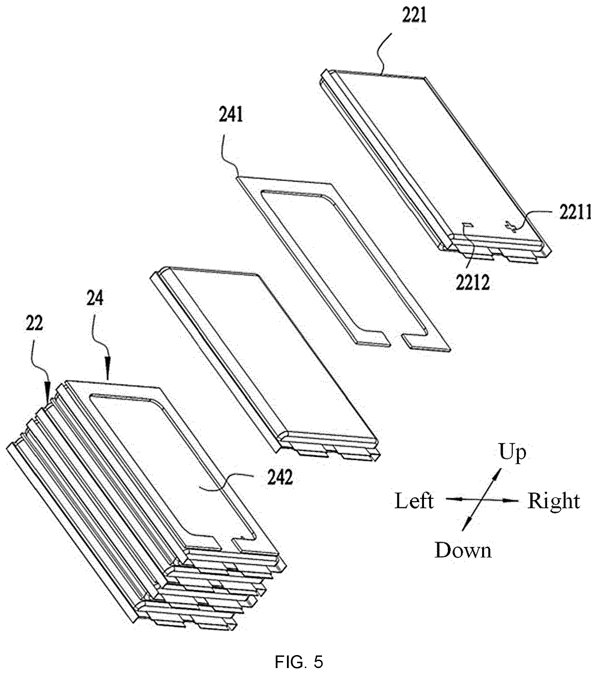

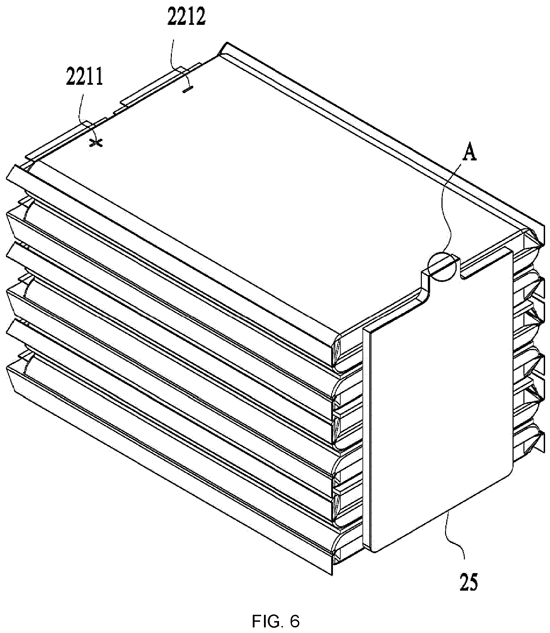

Referring to FIGS. 5 and 6, a battery pack 2 includes an upper housing 211 and a lower housing 212 that form an inner cavity 213. A cell assembly 22, a sealing member 23, and a deformation assembly 24 are all disposed in the inner cavity 113. The sealing member 23 and the lower housing 212 form a sealed chamber (not shown in the figure), and the cell assembly 22 is disposed in the sealed chamber.

The deformation assembly 24 includes multiple deformation elements 241. The deformation elements 241 are separately disposed between adjacent cell units 221, and the multiple deformation elements 41 are opposite to the cell units 221 in the up and down direction. Specifically, the external dimension of the deformation element 241 is basically the same as the external dimension of the cell unit 221. Since the cell unit 221 expands in volume at high temperatures or during charging, to provide enough space for expansion and have a better heat dissipation effect, a through hole may be disposed in the middle part of each of the multiple deformation elements 241, the upper surface of the deformation element 241 is in contact with the lower surface of the cell unit 221 in the adjacent upper layer, and the lower surface of the deformation element 241 is in contact with the upper surface of the cell unit 221 in the adjacent lower layer so that the deformation element 241, the cell unit 221 in the adjacent upper layer, and the cell unit 221 in the adjacent lower layer form air cavities 242. Specifically, the deformation element 241 may be made of deformation-reversible material and have a better heat conduction effect. Optionally, the deformation element 241 may be made of sponge material or other materials with a better heat dissipation effect. **In** addition, it is to be noted here that the material of the deformation element is not limited in the present application, and the deformation element may be adapted to the air cavity 242 through magnetic deformation or other deformation methods.

When the battery pack is stored at high temperatures or in the process of charging and discharging, the air pressure in the sealed chamber increases as the temperature rises and squeezes the cell units 221, so the air pressure squeezes the cell units 221, causes the cell units 221 to move toward two sides of a stacking surface, and finally squeezes and deforms the housing.

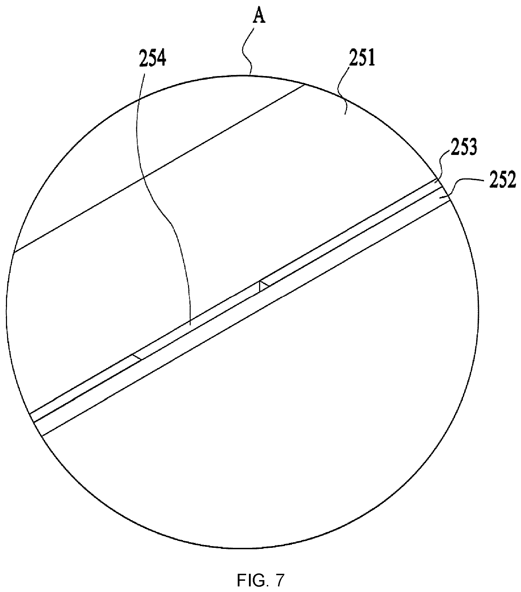

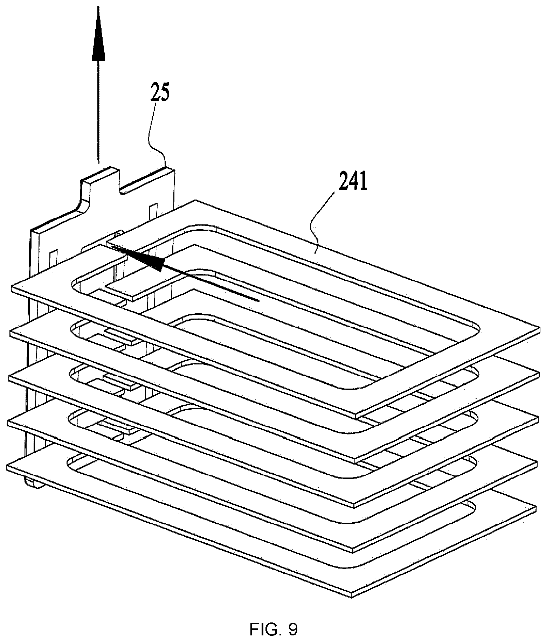

Referring to FIGS. 7 to 9, the air-permeable device 25 is partially disposed on the side surface of the cell assembly 22. Specifically, the air-permeable device 25 is disposed on a side facing away from a positive electrode 2211 of the cell unit or a negative electrode 2212 of the cell unit. In this example, the air-permeable device 25 includes a first element 251, a second element 252, and a connector 253. The first element 251 is disposed on the side surface of the cell assembly 22, the first element 251 is provided with a through hole 2511 along the front and rear direction, the upper boundary of the through hole 2511 is disposed above the upper surface of the deformation assembly 24, and the lower boundary of the through hole 2511 is disposed below the lower surface of the deformation assembly 24. Specifically, the first element 251 is pasted on the side surface of the cell assembly 22 by glue. The second element 252 is fixed on the first element 251 through the connector 253. In this example, the second element 252 is made of PC, and the connector 253 is configured to be adhesive backing. At least one air-permeable passage 254 is formed on the air-permeable device 25, and the air-permeable passage 254 connects with multiple air cavities 242 and connects with the air outside the preceding sealed chamber, so as to achieve the balance of the air pressure inside and outside the sealed chamber of the battery pack 2.

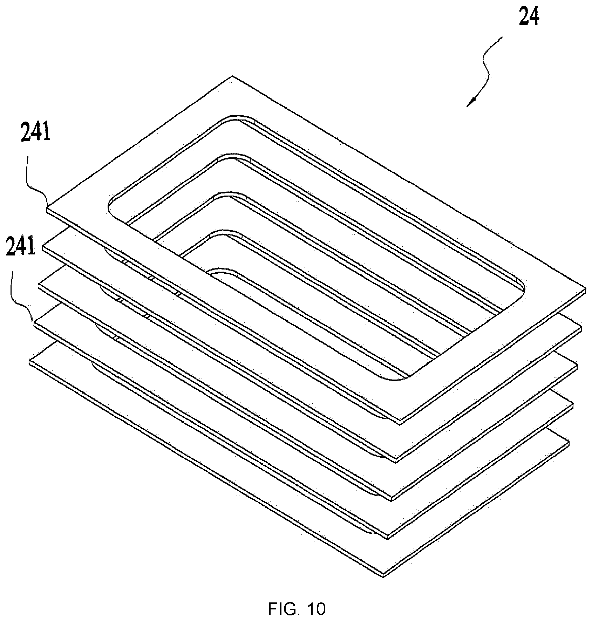

The connector 253 is provided with a through hole 2531 along the front and rear direction. Specifically, the external dimension of the through hole 2531 is basically the same as the external dimension of the through hole 2511 on the first element 251. The connector 253 is provided with a straight groove 2532 above the through hole 2531 along the up and down direction. The straight groove 2532, a first side surface 2512 of the first element 251, and a first side surface 2521 of the second element 252 form the air-permeable passage 254. The arrow direction in FIG. 10 is the air circulation direction in the battery pack 2. Specifically, in the working process of the battery pack 2, the air in the air cavities 242 connects with the air-permeable passage 2532 through the deformation elements 241, the through hole 2511 of the first element 251, and the through hole 2531 of the connector 253, so as to connect with the air outside the preceding sealed chamber and achieve the balance of the air pressure inside and outside the sealed chamber of the battery pack 2.

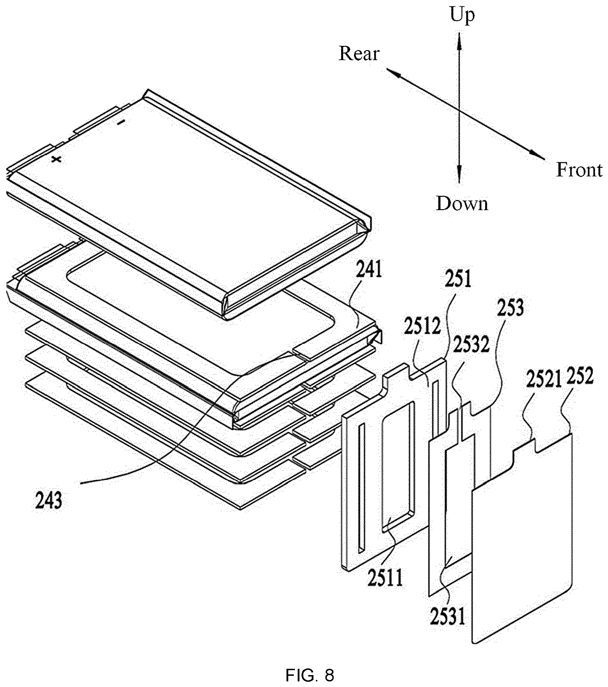

To further improve the effect of internal and external air pressure balance, specifically, the deformation element 241 may be set in an incomplete shape of homocentric rectangles. Referring to FIG. 8, a cutout 243 is disposed on a side of the deformation element 241 connected to the air-permeable device 25. The air in the air cavities 242 connects with the air outside the preceding sealed chamber through the cutouts 243 on the deformation elements 241, the through hole 2511 of the first element 251, the through hole 2511 of the connector 253, and the air-permeable passage 245, so as to achieve the balance of the air pressure inside and outside the sealed chamber of the battery pack 2. Specifically, since the connector 253 is configured to be adhesive backing, to achieve a better air pressure balance effect, optionally, the thickness of the adhesive backing may be set within a range of greater than or equal to 0.05 mm and less than or equal to 1 mm. In this example, the connector 253 may also be directly disposed on the first element 251 or the second element 252. During the assembly process of the air-permeable device 25, the first element 251 and the second element 252 are directly assembled.

Of course, since the deformation element 241 in this example has good air permeability, the deformation element 241 may also be set to a shape as shown in FIG. 10. The air in the air cavities 242 connects with the air outside the sealed chamber through the deformation elements 241, the through hole 2511 of the first element 251, the through hole 2531 of the connector 253, and the air-permeable passage 254, so as to achieve the balance of the air pressure inside and outside the sealed chamber of the battery pack 2.

It is to be noted that the air-permeable device in the preceding examples is higher than the upper surface of the sealing member in the up and down direction of the battery pack. It is to be understood that the air-permeable device may also be flush with or lower than the upper surface of the sealing member in the up and down direction, and the difference is that when the cell units in the battery pack are sealed through glue filling, special treatment is required to make the air-permeable passage connect with the air outside the sealed chamber in the battery pack.

In the preceding examples, the battery pack achieves the balance of the air pressure inside and outside the sealed chamber of the battery pack through the air-permeable passage on the air-permeable device. It is ensured that when the battery pack is stored at high temperatures or in the process of charging and discharging, the air pressure in the sealed chamber does not increase significantly as the temperature rises, thereby improving the safety performance of the battery pack. The air-permeable device in the preceding examples has a simple structure, a simple assembly process, and a low cost and is easy to implement.

## Claims

1. A battery pack (2) configured to supply power to a power tool, wherein the battery pack comprises:
a housing;
a cell assembly (22) disposed in the housing and comprising a plurality of stacked cell units (221);
a deformation assembly (24) comprising a plurality of deformation elements (241), wherein the plurality of deformation elements are separately disposed between adjacent ones of the plurality of cell units, and the plurality of deformation elements and the adjacent ones of the plurality of cell units form a plurality of air cavities (242);
a sealing member (23) disposed at least on a surface of the cell assembly, wherein the sealing member and the housing form a sealed chamber (213); and
an air-permeable device (25) partially disposed on a side surface of the cell assembly;
the battery pack being **characterized in that**
the air-permeable device comprises a first element (251), a second element (252), and a connector (253), wherein the first element and the second element are fixed through the connector; and
the connector is connected to or formed with an air-permeable passage (254), the air-permeable passage connects with the plurality of air cavities, and the air-permeable passage connects with air outside the sealed chamber.

2. The battery pack of claim 1, wherein the first element is partially disposed on the side surface of the cell assembly.

3. The battery pack of claim 1, wherein the plurality of deformation elements are configured to be deformation-reversible material.

4. The battery pack of claim 1, wherein each of the plurality of deformation elements is configured to be thermally conductive material or comprises a heat conducting component.

5. The battery pack of claim 1, wherein the cell assembly is disposed in the sealed chamber.

6. The battery pack of claim 5, wherein the sealing member is formed through a glue filling process.

7. The battery pack of claim 1, wherein the second element is configured to be polycarbonate (PC).

8. The battery pack of claim 7, wherein a thickness range of the connector is configured to be greater than or equal to 0.05 mm and less than or equal to 1 mm.

9. The battery pack of claim 8, wherein the connector is configured to be adhesive backing.

10. The battery pack of claim 1, wherein the housing comprises an upper housing (211) and a lower housing (212), the sealing member and the lower housing form the sealed chamber, and the cell assembly is disposed in the sealed chamber.

11. The battery pack of claim 1, wherein the air-permeable device is disposed on a side facing away from a positive electrode (2211) of the cell unit or a negative electrode (2212) of the cell unit.

12. The battery pack of claim 1, wherein each of the plurality of deformation elements is set in an incomplete shape of homocentric rectangles.

13. The battery pack of claim 1, wherein each of the plurality of elastic pad is provide with a cutout (243) connected to the air-permeable device.

## Patentansprüche

1. Ein Batteriepakt (2), eingerichtet, um ein Elektrowerkzeug mit Strom zu versorgen, wobei der Batteriepakt umfasst:
ein Gehäuse;
eine Zellanordnung (22), die in dem Gehäuse angeordnet ist und eine Vielzahl gestapelter Zelleneinheiten (221) umfasst;
eine Deformationsanordnung (24), die eine Vielzahl von Deformationselementen (241) umfasst, wobei die Vielzahl von Deformationselementen jeweils zwischen benachbarten Zelleneinheiten der Vielzahl von Zelleneinheiten getrennt angeordnet ist, und die Vielzahl von Deformationselementen und die benachbarten Zelleneinheiten eine Vielzahl von Luftkammern (242) bilden;
ein Dichtungselement (23), das zumindest auf einer Oberfläche der Zellanordnung angeordnet ist, wobei das Dichtungselement und das Gehäuse eine abgedichtete Kammer (213) bilden; und
eine luftdurchlässige Vorrichtung (25), die teilweise auf einer Seitenfläche der Zellanordnung angeordnet ist;
wobei der Batteriepakt **dadurch gekennzeichnet ist, dass**
die luftdurchlässige Vorrichtung ein erstes Element (251), ein zweites Element (252) und einen Verbinder (253) umfasst, wobei das erste Element und das zweite Element durch den Verbinder befestigt sind; und
der Verbinder mit einem luftdurchlässigen Durchgang (254) verbunden oder damit ausgebildet ist, der luftdurchlässige Durchgang mit der Vielzahl von Luftkammern verbunden ist, und der luftdurchlässige Durchgang mit der Luft außerhalb der abgedichteten Kammer verbunden ist.

2. Batteriepakt nach Anspruch 1, wobei das erste Element teilweise auf der Seitenfläche der Zellanordnung angeordnet ist.

3. Batteriepakt nach Anspruch 1, wobei die Vielzahl von Deformationselementen als verformungsumkehrbares Material eingerichtet ist.

4. Batteriepakt nach Anspruch 1, wobei jedes der Vielzahl von Deformationselementen als wärmeleitendes Material eingerichtet ist oder eine wärmeleitende Komponente umfasst.

5. Batteriepakt nach Anspruch 1, wobei die Zellanordnung in der abgedichteten Kammer angeordnet ist.

6. Batteriepakt nach Anspruch 5, wobei das Dichtungselement durch einen Klebstofffüllprozess ausgebildet ist.

7. Batteriepakt nach Anspruch 1, wobei das zweite Element als Polycarbonat (PC) eingerichtet ist.

8. Batteriepakt nach Anspruch 7, wobei ein Dickenbereich des Verbinders eingerichtet ist, größer oder gleich 0,05 mm und kleiner oder gleich 1 mm zu sein.

9. Batteriepakt nach Anspruch 8, wobei der Verbinder als Kleberücken eingerichtet ist.

10. Batteriepakt nach Anspruch 1, wobei das Gehäuse ein oberes Gehäuse (211) und ein unteres Gehäuse (212) umfasst, das Dichtungselement und das untere Gehäuse die abgedichtete Kammer bilden, und die Zellanordnung in der abgedichteten Kammer angeordnet ist.

11. Batteriepakt nach Anspruch 1, wobei die luftdurchlässige Vorrichtung auf einer Seite angeordnet ist, die von einer positiven Elektrode (2211) der Zelleneinheit oder einer negativen Elektrode (2212) der Zelleneinheit abgewandt ist.

12. Batteriepakt nach Anspruch 1, wobei jedes der Vielzahl von Deformationselementen in einer unvollständigen Form von konzentrischen Rechtecken angeordnet ist.

13. Batteriepakt nach Anspruch 1, wobei jedes der Vielzahl von elastischen Polstern mit einem Ausschnitt (243) versehen ist, der mit der luftdurchlässigen Vorrichtung verbunden ist.

## Revendications

1. Bloc-batterie (2) conçu pour fournir de l'énergie à un outil électrique, dans lequel le bloc-batterie comprend :
un boîtier ;
un ensemble de cellules (22) disposé dans le boîtier et comprenant une pluralité d'unités de cellule empilées (221) ;
un ensemble de déformation (24) comprenant une pluralité d'éléments de déformation (241), dans lequel la pluralité d'éléments de déformation est disposée séparément entre des unités de cellule adjacentes de la pluralité d'unités de cellule, et la pluralité d'éléments de déformation et les unités de cellule adjacentes forment une pluralité de cavités d'air (242) ;
un élément d'étanchéité (23) disposé au moins sur une surface de l'ensemble de cellules, dans lequel l'élément d'étanchéité et le boîtier forment une chambre étanche (213) ; et
un dispositif perméable à l'air (25) disposé partiellement sur une surface latérale de l'ensemble de cellules ;
le bloc-batterie étant **caractérisé en ce que**
le dispositif perméable à l'air comprend un premier élément (251), un second élément (252) et un connecteur (253), dans lequel le premier élément et le second élément sont fixés par le connecteur ; et
le connecteur est relié à ou formé avec un passage perméable à l'air (254), le passage perméable à l'air étant relié à la pluralité de cavités d'air, et le passage perméable à l'air étant relié à l'air à l'extérieur de la chambre étanche.

2. Bloc-batterie selon la revendication 1, dans lequel le premier élément est disposé partiellement sur la surface latérale de l'ensemble de cellules.

3. Bloc-batterie selon la revendication 1, dans lequel la pluralité d'éléments de déformation est conçue pour être en matériau réversible en déformation.

4. Bloc-batterie selon la revendication 1, dans lequel chacun de la pluralité d'éléments de déformation est conçu pour être en matériau thermoconducteur ou comprend un composant conducteur de chaleur.

5. Bloc-batterie selon la revendication 1, dans lequel l'ensemble de cellules est disposé dans la chambre étanche.

6. Bloc-batterie selon la revendication 5, dans lequel l'élément d'étanchéité est formé par un procédé de remplissage de colle.

7. Bloc-batterie selon la revendication 1, dans lequel le second élément est conçu pour être en polycarbonate (PC).

8. Bloc-batterie selon la revendication 7, dans lequel une plage d'épaisseur du connecteur est conçue pour être supérieure ou égale à 0,05 mm et inférieure ou égale à 1 mm.

9. Bloc-batterie selon la revendication 8, dans lequel le connecteur est conçu pour être en support adhésif.

10. Bloc-batterie selon la revendication 1, dans lequel le boîtier comprend un boîtier supérieur (211) et un boîtier inférieur (212), l'élément d'étanchéité et le boîtier inférieur formant la chambre étanche, et l'ensemble de cellules étant disposé dans la chambre étanche.

11. Bloc-batterie selon la revendication 1, dans lequel le dispositif perméable à l'air est disposé sur un côté opposé à une électrode positive (2211) de l'unité de cellule ou à une électrode négative (2212) de l'unité de cellule.

12. Bloc-batterie selon la revendication 1, dans lequel chacun de la pluralité d'éléments de déformation est défini dans une forme incomplète de rectangles homocentriques.

13. Bloc-batterie selon la revendication 1, dans lequel chacun de la pluralité de coussinets élastiques est pourvu d'une découpe (243) reliée au dispositif perméable à l'air.
